# EUROPÄISCHE PATENTSCHRIFT

(11) **EP 2 272 314 B1**
(45) Veröffentlichungstag und Bekanntmachung des Hinweises auf die Patenterteilung: **30.05.2012**
(21) Anmeldenummer: 10401084.8
(22) Anmeldetag: 22.06.2010
(51) Int. Cl.: A01C 7/08

(54) **Pneumatische Sämaschine, insbesondere Einzelkornsämaschine**
Pneumatic sowing machine, in particular single grain sowing machine
Semoir pneumatique, notamment semoir monograin

(30) Priorität: 29.06.2009 DE 102009026055
(43) Veröffentlichungstag der Anmeldung: 12.01.2011
(73) Patentinhaber: Amazonen-Werke H. Dreyer GmbH & Co. KG, 49205 Hasbergen (DE)
(72) Erfinder: Scheufler, Bernd, 49205 Hasbergen (DE); Resch, Rainer, 49170 Hagen a TW (DE)

(56) Entgegenhaltungen:
- EP-A1- 1 884 152
- EP-A1- 2 196 079
- EP-A2- 0 799 560
- DE-A1- 19 745 098

## Beschreibung

Die Erfindung betrifft eine pneumatische Sämaschine gemäß des Oberbegriffes des Patentanspruches 1.

Eine derartige pneumatische Sämaschine ist beispielsweise durch die DE 10 2006 036 740 A1 bekannt. Die entsprechende Europäische Veröffentlichung die Nummer EP 1 884 152. Diese als Einzelkornsämaschine ausgebildete pneumatische Sämaschine weist eine Vorrichtung auf, mittels welcher Fahrgassen angelegt werden können. Beim Anlegen der Fahrgassen wird die Saatgutzuführung zu den sich in den Fahrgassen befindlichen Säscharen unterbrochen. Hierbei werden bei dieser Einzelkornsämaschine, die mit einem Drucksystem ausgestattet ist, d.h. dass der Vorratsbehälter unter einem gegenüber dem Atmosphärendruck erhöhten Druck gesetzt ist, die die den diesen Säscharen zugeordneten Vereinzelungsreihen die Saatkörner mit einem Abstreifer abgestreift werden, so dass sie innerhalb des unter einem erhöhten Druck stehenden Saatgutbehälters dem Saatgutvorrat wieder zugeführt werden. Die abgelösten und zurückfallenden Saatkörner können hierbei die an den Perforationslöchern der Trommel anhaftenden Körner ablösen und somit den Vereinzelungsvorgang stören.

Durch DE 197 45 098 A1 ist eine weitere pneumatische Sämaschine bekannt geworden, deren Saatgutbehälter nicht unter einem erhöhten Druck steht. Zum Anlegen von Fahrgassen sind in den zu den Säscharen führenden Saatleitungen hinter dem Zentralverteiler Weichen angeordnet. Der eine Abgang der Weichen führt jeweils zu einer Saatleitung, die zu einem Säschar, führt und der andere Abgang führt zu einer Sammelleitung. Die Sammelleitung mündet im Vorratsbehälter. Ein derartiges System in der bekannten Weise lässt sich bisher nur anwenden, wenn der Saatgutbehälter nicht unter einem gegenüber dem Atmosphärendruck erhöhten Druck steht. Nur so kann mit einem relativ geringen Druck in der zum Saatgutbehälter führenden Rückleitung das zurückgeforderte Saatgut beim Anlegen von Fahrgassen in den Vorratsbehälter zurückgeleitet werden.

Der Erfindung liegt die Aufgabe zugrunde, beim Anlegen von Fahrgassen das an sich den Fahrgassensäscharen zugeführte und umgeleitete Saatgut in einem gegenüber dem Atmosphärendruck unter erhöhten Druck stehenden Saatgutbehälter in einfacher Weise zurückleiten zu können.

Diese Aufgabe wird erfindungsgemäß dadurch gelöst, dass die Abzweigleitungen in den Saatgutbehälter ausmünden, dass in den Abzweigleitungen vor der Einmündung in den Saatgutbehälter eine das zurückgeleitete Saatgut in den unter Überdruck stehenden Behälter übergebende Übergabeschleuse angeordnet ist.

Infolge dieser Maßnahme wird das beim Anlegen von Fahrgassen abgeleitete bzw. umgeleitete Saatgut, welches an sich den Fahrgassensäscharen zugeführt wird in eine Übergabeschleuse geleitet und über diese Übergabeschleuse in den unter Druck stehenden Saatgutbehälter übergeben.

Hierbei kann die Übergabeschleuse als Luftdruckschleuse ausgebildet sein. Hierdurch wird es in einfacher Weise möglich, dass zurückgeleitete Saatgut in den unter Druck stehenden Saatgutbehälter zu übergeben.

Eine einfache Ausgestaltung der Übergabeschleuse lässt sich dadurch erreichen, dass die Übergabeschleuse eine abwechselnd gegenüber der Dosiereinrichtung und dem Saatgutbehälter zumindest annähernd luft- und/oder druckdicht abschließbare Zwischenkammer aufweist.

Um in taktweiser mit einfachen Mitteln das zurückgeleitete Saatgut in den unter Druck stehenden Saatgutbehälter übergeben zu können, ist vorgesehen, dass vor dem Zwischenbehälter der Übergabeschleuse ein Sammelbehälter angeordnet ist.

In einer bevorzugten Ausführung der Übergabeschleuse ist vorgesehen, dass zwischen Sammelbehälter und der Übergabeschleuse Mittel zur Überführung des Saatgutes aus dem Sammelbehälter in den Zwischenbehälter und zwischen dem Zwischenbehälter und dem Saatgutbehälter zur Überführung des Saatgutes aus dem Zwischenbehälter in den Saatgutbehälter angeordnet sind, mittels denen der der Sammelbehälter gegenüber dem Zwischenbehälter und/oder der Zwischenbehälter gegenüber dem Saatgutbehälter in abwechselnder Weise zumindest annähernd luftdicht abschließbar sind. Hierdurch lässt sich in einfacher Weise das zurückgeleitete Saatgut zunächst in einen Zwischenbehälter sammeln und dann in taktweiser Arbeit in den Saatgutbehälter überführen.

Weitere Einzelheiten der Erfindung sind der Beispielsbeschreibung und den Zeichnungen zu entnehmen. Hierbei zeigen
- Fig. 1: das Verteilsystem einer pneumatischen Sämaschine in Prinzipdarstellung und Seitenansicht,
- Fig. 2: die Ausgestaltung der Weichen für die Abzweigleitung in einer Weichenstellung in Draufsicht im Teilschnitt und in vergrößertem Maßstab und
- Fig. 3: die Ausgestaltung der Weichen für die Abzweigleitung in einer anderen Weichenstellung in Draufsicht im Teilschnitt und im vergrößerten Maßstab.

Die pneumatische Sämaschine ist beispielsweise als Einzelkornsämaschine ausgebildet. Sie weist den Vorratsbehälter 1 mit dem zugeordneten Vereinzelungsgehäuse 2 auf. In diesem Vereinzelungsgehäuse 2 ist die als Vereinzelungstrommel 3 ausgebildete Dosiereinrichtung angeordnet. Der Vorratsbehälter 1 und das Vereinzelungsgehäuse 2 sind druckdicht ausgebildet und werden über die Druckluftleitung 4 von einem mittels einer nicht dargestellten Kraftquelle angetriebenen Gebläse 5 mit Druckluft beaufschlagt. Über das Gebläse 5 werden das Gehäuse 2 und der als Vorratsbehälter 1 ausgebildete Saatgutbehälter mit einem gegenüber dem Atmosphärendruck höheren Druck, nämlich einem Überdruck beaufschlagt.

Die Dosiereinrichtung ist als Vereinzelungstrommel 3 ausgebildet und weist mehrere in beabstandeten und umlaufenden Reihen angeordnete Vereinzelungsöffnungen auf. Diese Vereinzelungsöffnungen sind aufgrund der Tatsache, dass die Außenseite der Vereinzelungstrommel 3 im Bereich des Gehäuses 2, welche im Saatgutbehälter 1 und der druckbeaufschlagten Seite zugewandt ist, und der dem Atmosphärendruck ausgesetzten Innenbereich der Vereinzelungstrommel mit einer Druckdifferenz beaufschlagt. Hierdurch können sich Saatkörner, wenn die Vereinzelungsöffnungen der Trommel 3 durch den Saatgutvorrat bewegt werden, an diesen Vereinzelungsöffnungen in bekannter Weise anlagern. Die an den Vereinzelungsöffnungen angelagerten Saatkörner gelangen aufgrund des rotorischen Antriebes der Vereinzelungstrommel 2 zu den Einlassöffnungen 6 der an der Trommel 3 beginnenden Saatgutleitung. Aufgrund dem der Vereinzelungstrommel 3 zugeordneten Saatgutablöseelement lässt sich, die die Druckdifferenz zwischen dem Innen- und Außenraum der Trommel 3 unterbrechen.

Hierdurch lösen sich die vereinzelten Saatkörner von der Vereinzelungstrommel 3 und werden durch den in dem Saatgutbehälter 1 und dem Vereinzelungsgehäuse 2 herrschenden Überdruck erzeugte Luftströmung in den Saatgutleitungen 7 von der Luftströmung mitgerissen und über die Saatgutleitungen 7 zu den an den Saatgutleitungen 7 angeschlossenen und nicht dargestellten Säscharen mitgerissen.

Zumindest einigen der Saatgutleitungen 7 sind Umschaltvorrichtungen 8 mit Abzweigleitungen 9 zugeordnet. Hierdurch ist es möglich Fahrgassen anzulegen oder die Saatgutausbringbreite zu reduzieren. Über die Umschaltvorrichtung 8 mit der Abzweigleitungen 9 lässt sich das Saatgut wahlweise den Säscharen oder dem Saatgutbehälter 1 wieder zuleiten.

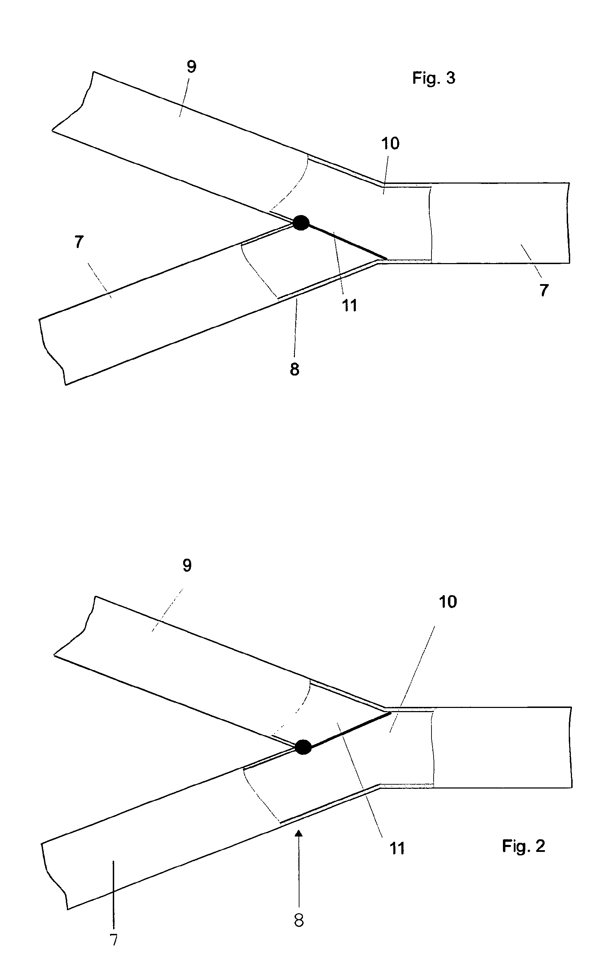

Die Umschalteinrichtungen 8 weisen die in den Fig. 2 und 3 dargestellte Weiche 10 auf. Dieser Weiche 10 ist eine Umschaltklappe 11, die über ein motorisches Betätigungselement 12 wahlweise in die in Fig. 2 oder in die in Fig. 3 dargestellte Position gebracht werden kann, zugeordnet. Hierdurch kann wahlweise die Rückführleitung 9 oder die zu den Säscharen führende Saatgutleitung 7 abgesperrt werden.

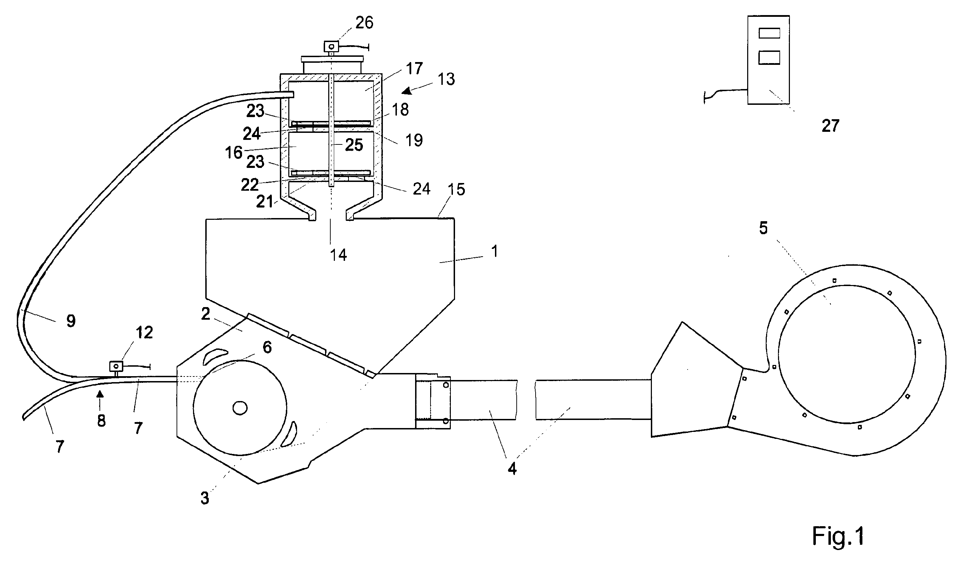

Um über die Rückführleitung 9 das Saatgut beim Anlegen von Fahrgassen oder bei einer Reduzierung der Arbeitsbreite in den Vorratsbehälter 1 zurückleiten zu können, ist dem Vorratsbehälter 1 eine Übergabeschleuse 13 zugeordnet. Diese Übergabeschleuse 13 ist an eine Öffnung 14 in der Wandung 15 des Saatgutbehälters 1 angeschlossen, wie Fig. 1 in prinzipieller Darstellung zeigt.

Wie in Fig. 1 erkennbar ist münden die Abzweigleitungen 9, über die das abgezweigte oder abgeleitete Saatgut dem Saatgutbehälter 1 wieder zugeführt werden soll, über die Übergabeschleuse 13 in den Saatgutbehälter 1.

Somit ist in den Abzweigleitungen 9 vor der Einmündung in den Saatgutbehälter 1 eine das zurückgeleitete Saatgut in den unter Überdruck stehenden Behälter 1 übergebende Übergabeschleuse 13 angeordnet. Diese Übergabeschleuse 13 ist als Luftdruckschleuse ausgestaltet. Die Übergabeschleuse 13 weist eine luft- oder druckdicht abschließbare Zwischenkammer 16 auf. Vor dieser Zwischenkammer oder Zwischenbehälter der Übergabeschleuse 13 ist der Sammelbehälter 17 und/oder -raum angeordnet. Zwischen dem Sammelbehälter 17 und der Zwischenkammer 16 sind als eine verdrehbare Scheibe 18 und eine feststehende Scheibe 19 ausgestalte Mittel zur Überführung des Saatgutes aus dem Sammelbehälter 17 in den Zwischenbehälter 16 und zwischen dem Zwischenbehälter 16 und dem Saatgutbehälter 1 zur Überführung des Saatgutes aus dem Zwischenbehälter 16 sind ebenfalls als eine verdrehbares Scheiben 20 und eine feststehende Scheibe 21 ausgebildete Mittel zur Überführung des Saatgutes aus dem Zwischenbehälter 16 in den Saatgutbehälter 1 angeordnet, wie Fig. 1 zeigt.

Mittels dieser verdrehbaren Scheiben 18 und 21, die jeweils eine Öffnung 23 aufweisen, die mit einer jeweiligen Öffnung 24 in den feststehenden Böden 19 und 22 abwechselnd zur Deckung zu bringen sind, lässt sich das Saatgut über die Abzweigleitungen 9 in den Vorratsbehälter 1 zurückführen.

In der in Fig. 1 dargestellten Stellung der Übergabeschleuse 13 sind die Öffnungen 23 und 24 in dem oberen Zwischenboden 19 zwischen dem Sammelbehälter 17 und dem Zwischenbehälter 16 und in der verdrehbaren Scheibe 18 zur Deckung gebracht, so dass das Saatgut aus dem Sammelbehälter 17 in den Zwischenbehälter 16 überführt wird.

Wenn sich die Scheiben 18 und 21, die über die Welle 25 von dem Antriebsmotor 26 rotierend angetrieben werden, weitergedreht haben, wird der Übergang zwischen dem Sammelbehälter 1 und dem Zwischenbehälter 16 luftdicht durch die verdrehbare Scheibe 18 verschlossen und die Öffnungen 23 und 24 in der unteren Übergabescheibe 21 und in dem stehenden Boden 22 zwischen dem Zwischenbehälter 16 und dem dem Saatgutbehälter 1 zugewandten Raum der Übergabeschleuse 13 zur Deckung gebracht, so dass das Saatgut aus dem Zwischenbehälter 16 in den Saatgutbehälter 1 fließen kann. Somit ist der Sammelbehälter 1 gegenüber dem Zwischenbehälter 18 und der Zwischenbehälter 18 gegenüber dem Saatgutbehälter 1 in abwechselnder Weise zumindest annähernd luftdicht abschließbar.

Das Betätigungselement 12 und der Motor 26 werden von einem Bordcomputer 27 entsprechend angesteuert.

## Patentansprüche

1. Pneumatische Sämaschine, insbesondere Einzelkornsämaschine, mit Überdruck beaufschlagtem Saatgutbehälter (1) und Gebläse (5) mit Antriebseinrichtung und einer als Druckluftleitung (4) ausgebildeten Zuluftleitung vom Gebläse (5) zum Saatgutbehälter (1), zur Dosiereinrichtung (3) und zu den Saatgutleitungen (7), über die das Saatgut zu den Säscharen bzw. Saatgutausläufen geleitet wird, und Umschaltvorrichtungen (8), die mit den Saatgutleitungen (7) bzw. Verteilerausläufen verbunden sind und die für das Anlegen von Fahrgassen und/oder zur Reduzierung der Saatgutausbringbreite schaltbar, um das Saatgut in die angeschlossenen Abzweigleitungen (9) zu leiten, **dadurch gekennzeichnet, dass** die Abzweigleitungen (9) in den Saatgutbehälter (1) ausmünden, dass in den Abzweigleitungen vor der Einmündung in den Saatgutbehälter (1) eine das zurückgeleitete Saatgut in den unter Überdruck stehenden Behälter (1) übergebende Übergabeschleuse (13) angeordnet ist.

2. Pneumatische Sämaschine nach Anspruch 1 **dadurch gekennzeichnet, dass** die Übergabeschleuse (13) als Luftdruckschleuse ausgebildet ist.

3. Sämaschine nach Anspruch 1, **dadurch gekennzeichnet, dass** die Übergabeschleuse (13) eine abwechselnd gegenüber der Dosiereinrichtung (3) und dem Saatgutbehälter (1) zumindest annähernd luft- und/oder druckdicht abschließbare Zwischenkammer (16) aufweist.

4. Sämaschine nach Anspruch 1, **dadurch gekennzeichnet, dass** vor der Zwischenbehälter (16)der Übergabeschleuse (13) ein Sammelbehälter (17) angeordnet ist.

5. Sämaschine nach Anspruch 1, **dadurch gekennzeichnet, dass** zwischen Sammelbehälter (17) und dem Zwischenbehälter (16) der Übergabeschleuse (13) Mittel (18,19,21,22) zur Überführung des Saatgutes aus dem Sammelbehälter (17) in den Zwischenbehälter (16) und zwischen dem Zwischenbehälter (16) und dem Saatgutbehälter (1) zur Überführung des Saatgutes aus dem Zwischenbehälter (16) in den Saatgutbehälter (1) angeordnet sind, mittels denen der der Sammelbehälter (1) gegenüber dem Zwischenbehälter (16) und/oder der Zwischenbehälter (16) gegenüber dem Saatgutbehälter (1) in abwechselnder Weise zumindest annähernd luftdicht abschließbar sind.

## Claims

1. Pneumatic sowing machine, in particular a single grain sowing machine, having a seed material container (1) which is acted upon with overpressure, and a blower (5) with a drive device and an air inlet line which is realized in the form of a compressed air line (4) from the blower (5) to the seed material container (1), to the metering device (3) and to the seed material lines (7), by means of which the seed material is directed to the sowing coulters or seed material outlets, and having switching apparatuses (8) which are connected to the seed material lines (7) or distributor outlets and which are connectable for the laying of tramlines and/or for reducing the delivery width of the seed material in order to direct the seed material into the connected branch lines (9), **characterized in that** the branch lines (9) open out into the seed material container (1), **in that** a transfer lock (13), which transfers the returned seed material into the pressurized container (1), is arranged in the branch lines upstream of the opening into the seed material container (1).

2. Pneumatic sowing machine according to Claim 1, **characterized in that** the transfer lock (13) is realized in the form of a compressed air lock.

3. Sowing machine according to Claim 1, **characterized in that** the transfer lock (13) has an intermediate chamber (16) which is closable in an at least approximately air-tight and/or pressure-tight manner alternately with respect to the metering device (3) and the seed material container (1).

4. Sowing machine according to Claim 1, **characterized in that** a collecting container (17) is arranged upstream of the intermediate container (16) of the transfer lock (13).

5. Sowing machine according to Claim 1, **characterized in that** means (18, 19, 21, 22) are arranged between the collecting container (17) and the intermediate container (16) of the transfer lock (13) for conveying the seed material out of the collecting container (17) into the intermediate container (16) and between the intermediate container (16) and the seed material container (1) for conveying the seed material out of the intermediate container (16) into the seed material container (1), by way of which means, in an alternating manner, the collecting container (1) is closable at least in an approximately air-tight manner in relation to the intermediate container (16) and/or the intermediate container (16) is closable at least in an approximately air-tight manner in relation to the seed material container (1).

## Revendications

1. Semoir pneumatique, notamment semoir monograine comportant un réservoir à semences (1) mis en pression et une machine soufflante (5) ayant une installation d'entraînement et une conduite d'alimentation en air sous la forme d'une conduite d'air comprimé (4) reliant la machine soufflante (5) au réservoir de semences (1) pour l'installation de dosage (3) et la conduite de semences (7) par laquelle les semences sont distribuées aux socs de semoir ou aux sorties de distribution et des dispositifs de commutation (8) reliés aux conduites de semences (7) ou sorties de distributeur et qui peuvent être commutées pour réaliser des voies de passage et/ou pour réduire la largeur d'épandage des semences, pour conduire les semences dans les conduites de dérivation (9), raccordées,
semoir pneumatique **caractérisé en ce que**
- les conduites de dérivation (9) débouchent dans le réservoir à semences (1),
- en amont de l'embouchure des conduites de dérivation dans le réservoir à semences (1), il y a un sas (13) pour transférer en retour les semences dans le réservoir (1) en pression.

2. Semoir pneumatique selon la revendication 1,
**caractérisé en ce que**
le sas (13) est un sas à air comprimé.

3. Semoir pneumatique selon la revendication 1,
**caractérisé en ce que**
le sas (13) est une chambre intermédiaire (16) qui se ferme au moins sensiblement de manière étanche à l'air et/ou à la pression, alternativement vis-à-vis de l'installation de dosage (3) et vis-à-vis du réservoir à semences (1).

4. Semoir pneumatique selon la revendication 1,
**caractérisé en ce qu'**
un réservoir collecteur (17) est prévu en amont du réservoir intermédiaire (16) du sas (13).

5. Semoir pneumatique selon la revendication 1,
**caractérisé par**
des moyens (18, 19, 21, 22) pour transférer les semences du réservoir collecteur (17) dans le réservoir intermédiaire (16) et entre le réservoir intermédiaire (16) et le réservoir à semences (1) pour transférer la semence du réservoir intermédiaire (16) dans le réservoir à semences (1), ces moyens étant prévus entre le réservoir collecteur (17) et le réservoir intermédiaire (16) du sas (13), moyens par lesquels le réservoir collecteur (17) peut être fermé au moins sensiblement de manière étanche à l'air, alternativement par rapport au réservoir intermédiaire (16) et/ou le réservoir intermédiaire (16) peut l'être par rapport au réservoir à semences (1).
